# EUROPEAN PATENT APPLICATION

(11) **EP 4 672 795 A1**
(43) Date of publication of application: **31.12.2025**
(21) Application number: 24382684.9
(22) Date of filing: 25.06.2024
(51) Int. Cl.: H04W 12/30, H04W 12/40, G06F 8/65

(54) **METHOD, CONFIGURATION PROGRAM, OPERATING SYSTEM DATASET, COMPUTER-READABLE DATA CARRIER AS WELL AS SERVER DEVICE FOR CONFIGURING A USER DEVICE AND SAME WITH AN OPERATING INSTANCE MATCHING DATA FORMATS OF DATA OBJECTS AFTER AN UPDATE PROCESS**

(71) Applicant: Giesecke+Devrient Mobile Security Germany GmbH, 81677 München (DE)
(72) Inventor: PATIÑO, David Piedra, 08820 El Prat De Llobregat (Barcelona) (ES); GIFRE, Clara, 08820 El Prat De Llobregat (Barcelona) (ES); LÓPEZ, Maria Rivera, 08820 El Prat De Llobregat (Barcelona) (ES); MANGAS, David Garijo, 08820 El Prat De Llobregat (Barcelona) (ES); RUAU, Federico, 08820 El Prat De Llobregat (Barcelona) (ES)
(74) Representative: LKGLOBAL Partnerschaftsgesellschaft mbB

(57) **Abstract**

A method, as well as a corresponding configuration program (10), an operating system dataset (O), a computer-readable data carrier (11, 12, 13), a user device (3), and a server device (4) are provided, wherein for configuring the user device (5), the steps of providing a secure element (6) of the user device (5), such as an eUICC, with an operating system dataset (O) for operating the secure element (6), the operating system dataset (O) comprising a previous version (A) of at least one executable data subset (E) defining a former version (X) of an application process (C) configured to access at least one data object (D) having a predefined data format (M); sending an update data subset (F) to the secure element (6) comprising a following version (B) of the at least one executable data subset (E) defining a later version (Y) of the application process (C) configured to access the at least one data object (D); and installing the following version (B) of the at least one executable data subset (E) on the secure element (6) such that the later version of the application process (C) can be executed, are performed; wherein when the later version of the application process (C) can be executed, an operating instance (V) implemented by the operating system dataset (O) checks whether the predefined data format (M) of the at least one data object (D) matches a required data format (N) defined by the later version of the application process (C) before accessing the at least one data object (D) with the later version (Y) of the application process (C).

## Description

### Technical Field

The present disclosure relates to the field of configuring user devices, for example, smart cards, transaction cards, personal mobile devices or Internet-of-Things (IoT) devices, or alike, for being securely operated by an authorized user, for instance for conducting secure transactions and/or participating in communication networks. In particular, the present disclosure relates to a method of configuring a user device, in particular for secure operation involving a trusted entity, a configuration program for configuring a user device, in particular for secure operation involving a trusted entity, an operating system dataset for a secure element of a user device, such as an eUICC, a computer-readable data carrier, a user device, in particular for allowing secure operation involving a trusted entity, and a server device, in particular a security server providing a secure location for in particular for allowing secure operation of user devices involving a trusted entity.

### Background of the Invention

User devices, such as smart cards (e.g., so-called java cards), identification cards, transaction cards, personal mobile devices or IoT-devices, are known from the prior art. The user devices are commonly configured to employ electronic subscriber profiles authenticating a user for secure transactions or communicating on telecommunication networks, e.g., mobile networks. Such user devices are typically equipped with an electronic/embedded secure element (SE, eSE), also known as tamper resistant element (TRE), which may take the form of an UICC, eUICC, iUICC, SIM, eSIM, iSIM, or alike, configured to store one or more of the electronic subscriber profiles that may allow the user devices to connect to one or more mobile networks. A subscriber profile (e.g., an eSIM profile) may be generated by a mobile network operator (MNO) and may be stored, e.g., downloaded to a mobile user device. The subscriber profile may then be installed on a secure element of the user device and used for communication over a corresponding mobile network by the user device.

The secure elements are run by operation systems (OS) containing software and/or firmware for operating the secure elements. Those OS need to be up to date in order to provide full and reliable functionality of the secure elements. An OS Update is especially relevant with the deployment of embedded Secure Elements (eSE) in the form of eUICC or alike. As opposite of traditional pluggable SIMs that can be inserted and removed, eSEs are soldered into user devices, making it very difficult (or costly) to replace them during the life cycle of the user devices.

Consequently, there is a need for so-called firmware-upgrades and/or updates that allow to modify the content of the eSE in the event that it has to be kept up to date and/or a technical issue has to be fixed. For example, one possible reason for that firmware has to be kept up to date is if a related standard, such as a GSMA specification, relating to the user device changes or is being newly implemented. In any case, such updates can be carried out with the help of an Open Firmware Loader (OFL), or alike, which is specifically designed software component in charge of firmware upgrades including OS updates in the secure element. The need to be able to update the software for certain SE/TRE has generated many different approaches worldwide. In some solutions, there is a separate entity (ITL - Image Trusted Loader, OFL, Update Agent) which is kept in charge in the SE/TRE while the full OS, or only part of it, is changed. The states of the SE/TRE are then not really defined according to any global entity.

WO 2023 006247 A1, for example, relates to a method and an apparatus for updating software loaded on a secure element, SE, which SE comprises an update agent handler, and an update agent. In a first step, a request to back-up a current version of software loaded on the SE is received at the SE. The request is preferably sent from a device, external to the SE. Upon receiving the backup request, the SE performs a secure backup of the current software version, and returns the software backup to the device, to be stored thereon. In a further step, the SE performs an update process of the current software version, to obtain an updated software version. If the update process fails, a rollback is performed at the SE to restore the software backup as a new current software version on the SE.

EP 4 124 978 A1 relates to a method for updating an OS administering a file system in an SE. The method comprises the steps of providing an update agent in the SE; assuming control of the SE by the update agent from the operating system; loading an OS image into the SE, the OS image representing an update of the operating system; providing an updated operating system by installing the OS image; and handing over control of the SE by the update agent to the updated operating system. Within this update process, the update agent provides a provisional file system in the SE and administers the provisional file system as long as the update agent is in control of the SE. The present invention also relates to a respective secure element, a respective update agent, and to a respective computer-program product.

EP 4 120 066 A1 relates a method and a device for upgrading an Executable Load File (ELF), having dependencies, on a Secure Element, SE. The method comprises in a first step receiving a request for upgrading an ELF, the request comprising a first identifier, identifying a first ELF version loaded on the SE, a second identifier, identifying a second ELF version loaded on the SE, and an upgrade option. Upon receiving the request, dependencies of the first ELF version from other ELFs loaded or stored on the SE are determined. Subsequently, if dependencies have been determined, it is checked whether the upgrade request is allowed. If the update request is allowed, an upgrade session is started, and the first ELF version is replaced with the second ELF version. The dependencies of the first ELF version are then linked to the second ELF version.

WO 2023 274579 A1 relates to methods, apparatus, and systems for implementing an encryption scheme for providing a software image to a secure element. The software image is converted into a sequence of ciphered blocks, which is protected with an authentication tag to obtain a sequence of protected blocks, which are then transmitted to an update agent on the secure element. The steps of converting the software image into a sequence of ciphered blocks and protecting the sequence of ciphered blocks with an authentication tag are implemented by an authenticated encryption function using a same block cipher.

WO 2023 274578 A1 relates to a method, a data structure, and an update agent for implementing a scheme for downloading an operating system image onto a secure element. The update agent receives from an external device an installation package for installing an operating system onto the secure element. The update agent requests control of the secure element and loads the operating system received with the installation package into the secure element, after which control of the secure element is transferred to the operating system.

WO 2023 274577 A1 relates to a method, an update agent and an off-card entity for implementing an authentication scheme for providing a software image to a secure element. An installation package comprising a package binding function for linking the installation package to the secure element, a manifest, a manifest signature generated using a block-cipher algorithm, and a software image is received at an update agent within the secure element. The update agent implements an authentication and integrity scheme by verifying various signatures contained within the installation package and install the software image in case of successful authentication and integrity verification.

WO 2022 038192 A1 is directed towards a method for making sure that a piece of software to be installed on an end device is compatible with an existing software and especially the underlying hardware structure of the end device. Consequently, new software components can be evaluated before installing them, thus preventing incompatible software components from being installed on an end device which would harm or destroy the same. Furthermore, a system arrangement is implemented in accordance with the suggested method along with a computer program product comprising control instructions for implementing the suggested method.

US 10 732 690 B2 relates to methods, apparatus, and systems for monitoring operation of a device. More particularly, the present techniques provide methods for monitoring operation of a device by observing state transitions which occur during the running of a device process following a firmware update, and either comparing the observed state transitions to a state transition map generated within the device or comparing the observed state transitions to a state transition model in, or associated with, the firmware update.

EP 1 475 983 A1 describes an apparatus and method of uplink data during cell update in universal mobile telecommunications system user equipment are disclosed herein. According to one aspect of the present application, there is provided a user equipment to send uplink data to a UTRAN during a CELL UPDATE. The apparatus has an uplink data saving RRC with an uplink data store to save the uplink data while the CELL UPDATE procedure is ongoing, and a state machine having a Cell FACH state and/or a Cell DCH state. The uplink data saving RRC sends the saved uplink data to the UTRAN via an UPLINK DIRECT TRANSFER when the CELL UPDATE procedure has completed, and the state machine enters either Cell FACH or Cell DCH state. According to another aspect of the present application, there is provided a method of sending uplink data to a UTRAN during a CELL UPDATE procedure. The method includes the steps of saving the uplink data while the CELL UPDATE procedure is ongoing and sending the saved uplink data to the UTRAN via an UPLINK DIRECT TRANSFER when the CELL UPDATE procedure is completed, and the user equipment is in one of CELL FACH and CELL DCH state.

Methods for providing and upgrading secure elements of user devices, including OS updates, as described above, may not fully satisfy all requirements regarding their deployability and availability on the one hand, as well as functional safety and security on the other hand. For example, it is desirable that both, the OS, and the secure elements have the same origin and preferably same state of development in order to ensure functional safety and security. However, due to deployability and availability restrictions, it may not be always assured that the OS, as well as the secure elements have the same origin, corresponding versions, or meet certain future requirements, especially if an implementation of a new specification or standard for operating the user devices is expected to be issued during lifetime of the user device and/or respective secure element. This may limit the functionality, especially a spectrum of (future) capabilities, of the user device, may compromise functional safety and security when operating user devices, or may even lead to that the devices cannot be configured properly, keeping in mind that not only the OS but also related data structures can be affected by updating procedures.

### Summary of the Invention

It may be seen as an object to improve the interaction between the secure elements and their OS. In particular, it may thus be seen as an object to provide a way to handle secure elements and their OS in a way that a future proof functional spectrum, safety and security may be assured, while not compromising deployability, availability, and/or data integrity. These objects are at least partly achieved by the subject-matter of the independent claims.

According to an aspect, a method of configuring a user device, in particular for secure operation involving a trusted entity, is provided, the method comprising the steps of providing a secure element of the user device, such as an eUICC, with an operating system dataset for operating the secure element, the operating system dataset comprising a previous version of at least one executable data subset defining a former version of an application process configured to access at least one data object having a predefined data format; sending an update data subset to the secure element comprising a following version of the at least one executable data subset defining a later version of the application process configured to access the at least one data object; and installing the following version of the at least one executable data subset on the secure element such that the later version of the application process can be executed; wherein when the later version of the application process can be executed, an operating instance implemented by the operating system dataset checks whether the predefined data format of the at least one data object matches a required data format defined by the later version of the application process before accessing the at least one data object with the later version of the application process.

According to an aspect, a configuration program for configuring a user device, in particular for secure operation involving a trusted entity, is provided, wherein the configuration program comprises instructions which, when the configuration program is executed by a secure element, cause the secure element to carry out a corresponding method.

According to an aspect, an operating system dataset for a secure element of a user device, such as an eUICC, is provided, the operating system dataset comprising a at least parts of a corresponding configuration program and/or configured to carry out a corresponding method.

According to an aspect, a computer-readable data carrier is provided, having stored thereon a corresponding configuration program according and/or a corresponding operating system dataset.

According to an aspect, a user device is provided, in particular configured for allowing secure operation involving a trusted entity, wherein the user device is configured to carry out a corresponding method, comprises a corresponding configuration program, a corresponding operating system dataset and/or a corresponding computer-readable data carrier.

According to an aspect, a server device is provided, in particular a security server providing a secure location for in for allowing secure operation of user devices involving a trusted entity, wherein the server device is configured to carry out a corresponding method, comprises a corresponding configuration program, a corresponding operating system dataset and/or a corresponding computer-readable data carrier.

The secure element may be understood as a tamper resistant element (TRE). The at least one update data subset may be provided as a data image. The update data subset may comprise the following version at least one executable data subset defining a version of the application process configured to access the at least one data object. The application process may comprise and/or involve program application and/or application programming interface (API). A complete operating system update dataset comprising the at least one update data subset may be provided for replacing the previously installed operating system dataset. Data objects can be and/or comprise any kind of data element or constructs of data, including, but not limited to data gateways, data accesses, data streams, data blocks, data files, or alike, such as binaries, sounds, images, videos, text, emails, documents, images, folders, etc. The expression "dataset" can be understood as any kind of data composition, such as a file, including source code, object code, or binaries, which may have or fulfil a certain technical function.

The proposed solution allows for providing updated operating system setups and/or application data subsets without the need to alter or erase data objects, such as personal data stored on the user device and/or the secure element by the user. For example, the solution can be implemented by providing the operating system dataset in the form of an eOS along with application data subsets. Such an eOS and/or respective application can be configured (i.e., in factory) with a minimum eSIM configuration necessary for fielding the user device. The eOS can be provided by a respective trusted entity (including respective identification codes and keys, such as activation keys and public keys) to perform an activation of functions and/or profiles later on in the field, where the eOS can still be updated as required and/or desired without the need to alter or erase certain data objects for or during the updating process.

The proposed solution has the advantage over the prior art, that the operating system dataset can be delivered along with application data subsets to any manufacturing facility, including OEM/ODM vendor facilities, and fabrication facilities of the secure element, regardless of a change to standards and/or specifications relating to the user device between the delivery and a later point of the time of deployment of user devices and/or the secure elements to customers. At first, the operating system dataset and/or application data subsets allow for configuring the user device and/or the secure element in a way that it can be deployed to customers, enabling them to adopt upcoming or following standards and/or specifications along with a respective functional spectrum, safety, and security by means of the operating system dataset along with application data subsets. Later on, update data subsets can be installed without the need to reset the user device and/or secure element back to default settings.

Hence, the proposed solution allows for a configuration and update of the secure element "Over-The-Air", removing the necessity of physically replace the secure element for updates and/or upgrades. The data to be updated can be kept minimal as a preferably large amount of data for default operation of the user device can be implemented in the operating system dataset which may provide an initial operating system and respective application processes for the secure element. Thereby, secure elements and their OS and/or application programs can be handled in a way that a future-proof functional spectrum, safety and security may be assured, while not compromising their deployability and availability.

Further developments can be derived from the dependent claims and from the following description. Features described with reference to a user device, secure element, server device and components thereof may be implemented as method steps, or vice versa. Therefore, the description provided in the context of the user device, secure element, server device and their components apply in an analogous manner also to respective methods. In particular, features and functions of the user device, secure element, server device and their components may be implemented as method steps which in turn may be implemented as respective device features or functions.

According to a possible embodiment of the method, the method further comprises the step of updating the predefined data format to the required data format if the predefined data format does not match the required data format. The data formats may correspond to respective classes, also called data instances, such as float, integer, short, etc. This further improves flexibility in handling secure elements and their OS and/or application programs in a way that a future-proof functional spectrum, safety and security may be assured, while not compromising their deployability and availability.

According to a possible embodiment of the method, the step of checking is being carried out upon a first time of handling the at least one data object with the later version of the application process. For example, whenever a data object is supposed to be used, then the data object is updated at the time of first usage. A respective format or instance of the data object can be checked before accessing the respective data object. This allows for updating data objects just in time which helps to save computing resources and to avoid unwanted data changes.

According to a possible embodiment of the method, the predefined data format is being adjusted to the required data format if the predefined data format does not match the required data format. In order to create a new data object, and underlying previous data object can be copied and morphed into the new object. For example, an old data array of a size "3" would be copied into a new data array of a size "4". This further helps in saving computing resources and to avoid unwanted data changes.

According to a possible embodiment of the method, the at least one data object is allocated to a certain memory region and the method further comprises the step of reallocating the at least one data object to a different memory region if the predefined data format does not match the required data format. A defragmentation mechanism can solve efficient use of the memory allocations. This can again help in saving computing resources, in particular memory space required, and avoiding unwarranted data changes.

According to a possible embodiment of the method, the method further comprises the step of discarding the at least one data object in the predefined data format if the predefined data format does not match the required data format and/or data class. For example, after copying an old data array of a size "3" into a new data array of a size "4", the old data array can be discarded. This can help to free memory space after an update has been performed.

According to a possible embodiment of the method, a data update instance implemented by the operating system dataset carries out the step of checking whether the predefined data format matches the required data format. In other words, the operating system of the secure element provided by a trusted entity can run the data update instance for checking compatibility of predefined data formats and required data formats. Thereby, a secure updating procedure of data formats of the data objects can be assured.

According to a possible embodiment of the method, the step of installing the following version of the at least one executable data subset is being carried out by an installation program dataset. The installation program dataset can be implemented as an update agent and/or installation management entity be provided by a trusted entity. This further helps in assuring a secure updating procedure.

According to a possible embodiment of the method, an installation instance implemented by the installation program dataset controls the step of installing the following version of the at least one executable data subset and afterwards hands over control to the operating instance. The operating instance can then take control of a finalization of the update procedure, for example, by implementing the data update instance. This helps in providing reliable and secure updating processes for secure elements.

According to a possible embodiment of the method, the at least one data object is being left untouched when installing the following version of the at least one executable data subset. For example, the data contents of the original data object can be encapsulated during the update process and/or afterwards before first accessing the data object. This further helps in avoiding unwanted data changes and inconsistencies.

According to an alternative, and/or additional solution, a method of configuring a user device, in particular for secure operation involving a trusted entity, is provided, the method comprising the steps of providing a secure element of the user device, such as an eUICC, with an operating system dataset enabling an operating instance for operating the secure element; sending at least one update data subset to the secure element for updating the operating system dataset, and installing the at least one update data subset on the secure element; wherein the operating instance is notified of the ongoing installation process of the at least one update data subset when updating the operating system dataset.

According to an embodiment of the method, the operating instance is aware of the installation process during operation of the secure element. Thus, the operating instance can be informed of data changes performed during the update process. This helps in avoiding unwanted and/or unauthorized data changes in or access to the secure element.

According to an embodiment of the method, during at least a part of the installation process, the operating instance is in a supervision state for supervising the installation process. For instance, a supervision instance of the operating system may be activated in the supervision state. Thereby, any steps of the update process can be supervised by the operating system. This further helps in avoiding unwanted and/or unauthorized data changes in or access to the secure element.

According to an embodiment of the method, the operating instance hands over control of the installation process to an installation program dataset. The installation program dataset can be implemented as an update agent and/or installation management entity. The installation program dataset may provide secure installation of the at least one updated a subset. This interaction between the operating system and the installation program further helps in avoiding unwanted and/or unauthorized data changes in or access to the secure element.

According to an embodiment of the method, an installation state machine for managing at least parts of the update process is being implemented by the installation program dataset. The installation state machine can provide information about the ongoing update process and its success. This enables to monitor the update process and thereby further helps in avoiding unwanted and/or unauthorized data changes in or access to the secure element.

According to an embodiment of the method, the installation state machine is located in the installation program dataset. The installation program dataset can be provided upon initialization of the secure element by the trusted entity. Thereby, a reliable control and/or implementation of the installation state machine can be provided, which further helps in avoiding unwanted and/or unauthorized data changes in or access to the secure element.

According to an embodiment of the method, the installation program dataset hands over control back to the operating instance after accomplishing at least a part of the update process. Consequently, before, during and after the installation process, the installation program dataset and/or the operating system dataset can be in full control of the secure element, possibly supervising each other, and preferably not leaving any gaps in controlling and social supervising the installation process. This again further helps in avoiding unwanted and/or unauthorized data changes in or access to the secure element.

According to an embodiment of the method, the operating instance secures at least one secure data element from being altered during at least a part of the installation process. In other words, the operating instance can protect at least one secure data element against any changes or interference during the update procedure. The secure data element can be provided as or be a part of at least one data object. Such a data object can be stored in the secure element, for example, in a secure storage location thereof. The secure storage location may have several memory regions for storing secure data elements and/or data objects. This can additionally help in avoiding unwanted and/or unauthorized data changes in or access to the secure element.

According to an embodiment of the method, the operating instance performs at least one secure data change during the installation process. The secure data change can be performed by the operating instance, a supervision instance, and/or a data update instance implemented by the operating system dataset. Thereby, unwanted as or unauthorized data changes in or access to the secure element can be further prevented, in particular since the operating system and its instances can be secured by respective security credentials.

According to an embodiment of the method, after finishing at least a part of the installation process the operating instance initiates a reboot of the secure element and/or performs necessary updates if predefined data formats do not match required data formats defined by the at least one update data subset. For example, the operating system may supervise any data adaptations which are necessary after finishing the update process. This further helps to avoid that any customized data, diversified data, and/or user data, for example, provided as at least one data object, is altered, or accessed in an unwanted or unauthorized way.

According to an alternative, and/or additional solution, a method of configuring a user device, in particular for secure operation involving a trusted entity, is provided, the method comprising the steps of providing a secure element of the user device, such as an eUICC, with an installation program dataset for managing at least parts of an installation process for loading data onto the secure element; wherein the installation program dataset implements an installation state machine located in the installation program dataset and configured to provide information regarding a status of the installation process.

According to an embodiment of the method, the installation state machine defines at least one pre-issuance condition and at least one post-issuance condition, wherein the at least one pre-issuance condition refers to a point of time before issuing the user device to a user and the at least one post-issuance condition refers to a point of time after issuing the user device to a user. The user device and/or secure element may be configured such that after once enabling the post-issuance condition, the user device and/or secure element cannot be transferred back to the pre-issuance condition. The pre-issuance condition may be reserved for the manufacturing process and highly sensitive data provisions, such as a loading an installation program dataset, operating system dataset, diversified data, security credentials, and/or user profiles onto the user device and/or secure element. Consequently, defining the pre-issuance condition and/or post-issuance condition helps in restricting access to the user device and/or secure element, preferably, to a trusted entity or at least manufacturing facilities certified by a trusted entity.

According to an embodiment of the method, the installation state machine defines an initialized state where the installation program dataset is loaded onto the secure element. The initialized state can be reserved for the pre-issuance condition. Thus, the user device and/or secure element may not be brought back into the initialized state after being first issued. This further helps in restricting access to the user device and/or secure element, preferably, to a trusted entity or at least manufacturing facilities certified by a trusted entity.

According to an embodiment of the method, the initialized state is enabled before personalizing the installation program dataset. In the initialized state, the installation program is provided with undiversified data which can be loaded into the installation program via personalization commands. Thereby, the initialized state can be assumed before in-factory personalization of the user device and/or the secure element. This helps in flexibly and efficiently, yet securely and reliably manufacturing as well as configuring the user device.

According to an embodiment of the method, the installation state machine defines a secured state where an installation instance implemented by the installation program dataset controls the installation process. In the secured state, a MockSIM, if activated, can prevent as power off of the secure element from a baseband. The secured state helps in providing a well-defined environment for configuring the user device and/or secure element after being issued to a user. This further helps in flexibly and efficiently, yet securely and reliably manufacturing as well as configuring the user device.

According to an embodiment of the method, in the secured state, the installation program dataset is personalized with diversified data. The diversified data may be provided in the form of and/or implemented as at least one user profile or related data. Thereby, the secured state may be enabled with the help of respective security credentials. This additionally helps in flexibly and efficiently, yet securely and reliably manufacturing as well as configuring the user device.

According to an embodiment of the method, the in the secured state, an operating system dataset for operating the secure element and/or an update data subset for updating the operating system dataset is permitted. At least one update data subset can be sent to the secure element for updating the operating system dataset and then installing the at least one update data subset on the secure element. An operating instance implemented by the operating system dataset can hand over control of the installation process to the installation program, in particular, to the installation instance for running the update in the secured state. After successful installation or accomplishing at least a part of the update process, the installation program can hand over control back to the operating instance.

The at least one update data subset may be provided as a data image. The update data subset may comprise a following version at least one executable data subset defining a version of an application process configured to access the at least one data object. The application process may comprise and/or involve program application and/or application programming interface (API). A complete operating system update dataset comprising the at least one update data subset may be provided for replacing the previously installed operating system dataset.

The operating instance can secure at least one secure data element from being altered during at least a part of the installation process. The operating instance can perform at least one secure data change during the installation process. During at least a part of the installation process, the operating instance can be in a supervision state for supervising the installation process. After finishing at least a part of the installation process the operating instance can initiate a reboot of the secure element and/or performs necessary updates if predefined data formats do not match required data formats defined by the at least one update data subset.

According to an embodiment of the method, the installation state machine defines an installed state where an operating system implemented by an operating system dataset installed on the secure element is controlling the secure element. In the installed state, the installation program can be deactivated. The installed state can be enabled during normal or standard operation of the user device. Thereby, and normal standard operation of the user device can be securely enabled as well as assessed.

According to an embodiment of the method, the installation state machine defines a locked state where the installation program dataset refuses to process and/or ignores any application commands. In other words, in the locked state, the installation program can be essentially deactivated, for example, if the installation program is compromised. For unlocking the application program, a signed unlocking command can be required which has to be properly verified and processed. Other than that, any refused application commands can be provided in the form of and/or comprise at least one Application Protocol Data Unit (APDU). This helps to prevent unauthorized or unwanted changes in or access to the secure element.

### Brief Description of the Drawings

- Fig. 1: is a schematic illustration of a configuration system for carrying out a method according to the present invention.
- Fig. 2: is a schematic illustration of an installation state machine implemented by the installation program dataset.
- Fig. 3: is a schematic illustration of an update process supervised by the operating system dataset.
- Fig. 4: is a schematic illustration of a process for adapting a predefined data for-mat of at least one data object to a required data format.

### Detailed Description of Embodiments

The following detailed description is merely exemplary in nature and is not intended to limit the invention and uses of the invention. Furthermore, there is no intention to be bound by any theory presented in the preceding background or the following detailed description. The representations and illustrations in the drawings are schematic and not to scale. Like numerals denote like elements. A greater understanding of the described subject matter may be obtained through a review of the illustrations together with a review of the detailed description that follows.

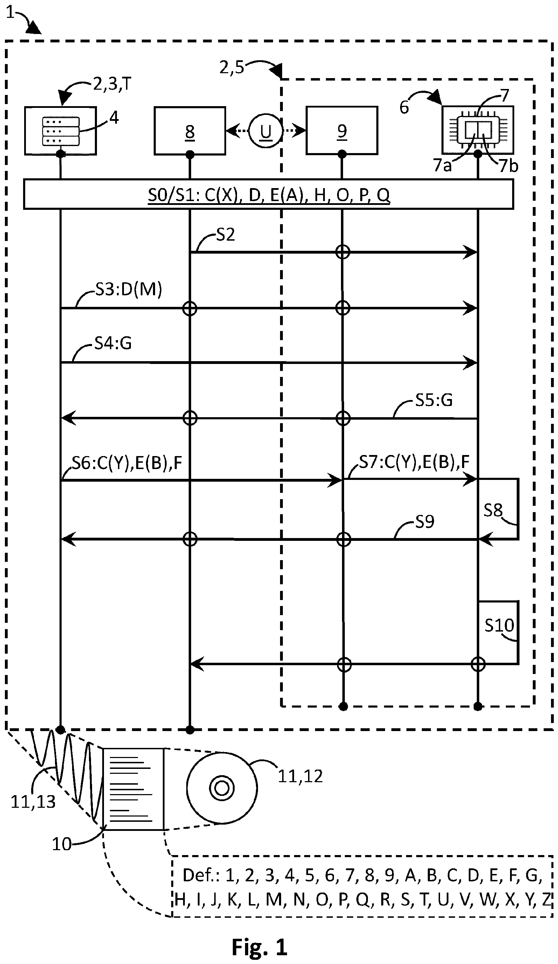

Fig. 1 shows a schematic illustration of a configuration system 1 comprising a computing device 2, for instance, in the form of a server device 3 controlled by a trusted entity T, which can include a hardware security module 4 adapted to store, manage and/or provide operating system datasets O for configuring a further computing device 2, for example, in the form of a user device 5 which may be embodied an Internet of Things (IoT) device, such as a multimedia device, camera, speaker, household appliance, measurement device, industrial installation, vehicle, vending machine, or alike, to be associated with a machine entity, and/or as a smart card, an identification card, a transaction card, a personal mobile device, such as a smartphone, smart-watch, etc., to be associated with a personal entity. For example, the server device 3 may be provided in the form of a Server for Subscription Manager Data Preparation + (SM-DP+).

In the present example, the user devices 5 may be adapted for secure operation, transactions and/or communication, e.g., via a telecommunication network (not shown) by means of at least one user profile dataset P to be saved in a respective secure element 6 or tamper resistant element (TRE), such as an UICC, eUICC, iUICC, SIM, eSIM, iSIM, SE, eSE, or alike, provided in the form of a computer chip. The user profile data sets P are generated based on respective personal records contained in data files on the server device 3, in particular, the hardware security module 4 thereof. For storing and managing user profile data sets P on the secure elements 6, an operating system dataset O is installed on the secure element 6, for example, in a secure storage location 7, such as an Issuer Security Domain - Root (ISD-R) provided on the secure element 6. The secure storage location may provide different memory regions, such as at least one first memory region 7a and at least one second memory region 7b.

The operating system dataset O comprises an executable data subset E which can be provided as a previous version A and a later version B defining a former version X and a later version Y, respectively, of an application process C configured to access at least one data object D. The executable data subset E can be updated from the previous version A to the later version B by means of an update data subset F. The data object D can have a predefined data format M and the required data format N corresponding to the former version X and the later version Y, respectively, of the application process C.

A management application 8 may be provided which can be configured to allow a user U to communicate with the user device 5, in particular the secure element 6, for example, directly and/or through a communication interface 9 to the user device 5. The management application 8 can be provided in the form of a remote manager, such as an eSIM IoT remote manager (eIM) which may be securely identified by means of an application identifier and/or authenticated by means of an authentication certificate. The communication interface 9 may be provided in the form of a logical end-to-end interface (ESep) enabling secure communications between the management application 8 and the secure element 6, which can be used to transfer data packages, such as eUICC Packages, for instance to carry out Profile State Management and eIM configuration tasks by means of the elM. For example, the communication interface 9 may be provided as a part of a local management application, such as a IoT Profile Assistant (IPA), which may take the form of an IoT Profile Assistant (IPAd) provided to the user device 5, and/or an IoT Profile Assistant provided (IPAe) arranged in the secure element 6. Alternatively, or additionally, the management application 8 and/or communication interface 9 may be provided as a local profile assistant (LPA) provided to the user device 5 and/or arranged in the secure element 6

Furthermore, the operating system dataset O may comprise an installation program dataset I, a user profile P and/or security credentials H, including application identifiers, authentication certificates and/or security keys. The security credentials H may comprise any kind of credentials defined by e.g., the GSMA, or alike. The security keys may comprise any kind of cryptographic code or key element which may be adapted to interact with the user devices 5, the secure elements 6, and/or the server device 3 of the trusted entity T as an issuer of any part of the operating system dataset O and/or any component thereof. The authentication certificates may be any kind of electronic certificate, for example, that can be issued by the trusted entity T, for authenticating an origin of the user devices 5, the secure elements 6, the secure storage location 7 and/or the operating system dataset O. Transmission lines (not shown) may be provided for handling and/or transferring the operating system dataset O may comprise any kind of wired and/or wireless transmission chains, including the Internet (for transmissions "Over-The-Air") as well as other physical and/or non-physical data carriers, which can be configured and secured as desired and required by the configuration system 1 and its components.

In any of the embodiments of the configuration system 1 as described herein, in particular the computing devices 2, can be configured to execute a computer program in the form of a configuration program 10. A computer-readable data carrier 11 can have stored thereon the configuration program 10 and may take the form of a computer-readable medium 12 and/or data carrier signal 13. When carrying out the configuration program 10, the security system 1 and any components thereof communicate as specified in the security program 10. Parameters associated with and/or underlying the security system 1, any of the components thereof and/or any steps S carried out thereby, can be defined in and/or by the configuration program 10.

In a first step S1, the server device 3 may provide any of the data components of the configuration system 1, including the operating system dataset O, possibly along with the installation program dataset I, respective diversified data L and/or user profile P associated with the user U, to the secure element 6 of the user device 5, for example through the communication interface 9 to be stored in the secure storage location 7 for deployment to the user U. In a second step S2, the previous version A of the executable data subset E including the former version X of the application process C may be activated, for example, by an activation signal triggered by the user U through the remote management application 8 and/or the communication interface 9, in order to enable the user device 5 to carry out operations according to the former version X. For activating the executable data subset E, the user may use respective security credentials H. In a third step 3, after activation and/or authorization through the security credentials H, the user U and/or server device 3 may transfer, create, and/or alter data objects D to and/or in, respectively, the secure element 6, in particular, in line with the predefined data format M as required by the previous version A of a respective application process C.

In a fourth step S4, a notification signal G may be provided by the server device 3 informing the user U that an update data subset F is available for installation of the secure element 6. Along with the notification signal G, another notification signal G in the form of a data request command for requesting and/or confirming installation of the update data subset F may be made available to be used by the user device 5, for example, in that the user U is allowed to trigger initiation of the update process by respective security credentials H to be checked in the secure element 6. In a fifth step S5, the user U can request installation of the update data subset F. In a sixth step, the update data subset F may be requested by the user U by sending the notification signal G for the update request to the server device 3.

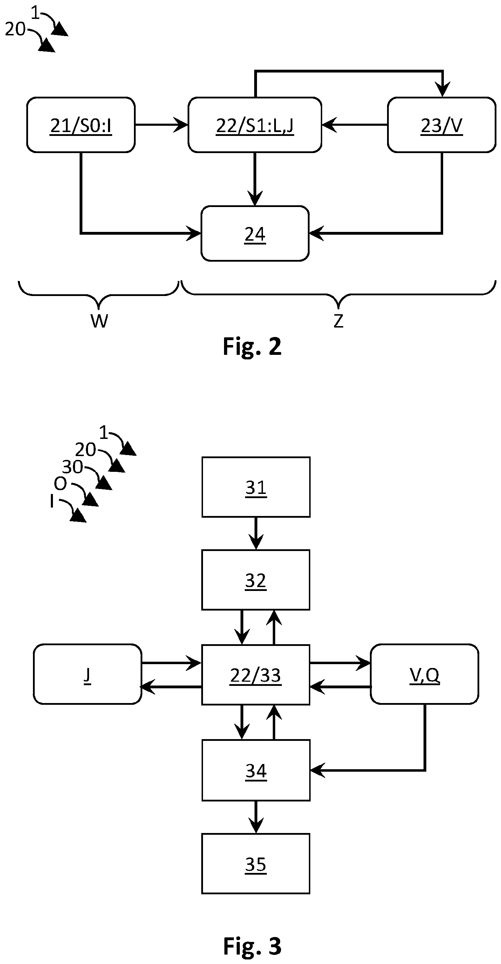

In a sixth step S6, the update data subset F may be provided from the server device 3 to the user device 5, for example, by download through and/or to the communication interface 9, such that the update dataset subset F is ready to be installed in the secure element 6. The update data subset F comprises the following version B of the at least one executable data subset E defining a later version Y of the application process C. In a seventh step S7, the update may be performed on the secure element 6 with the help of the installation program dataset I (see Fig. 2). The update process can be supervised by the operating system dataset O (see Fig. 3).

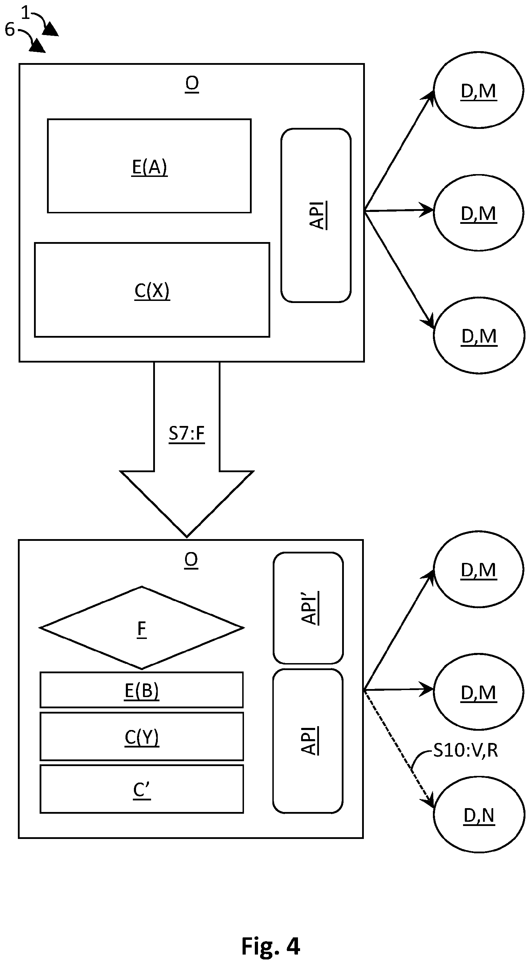

In an eights step S8, the update may be finished, for example, involving a reboot of the secure element 6. In a ninth step S9, the user U and/or the secure entity T may be informed of whether the update process was successful or not. If the update process was not successful, it may be repeated, for example, starting from the fourth step S4 of notifying the user U. If the update process was successful, then in a tenth step S10, it may be checked whether the predefined data for-mat M of at least one data object D matches are required data format N (see Fig. 4).

Fig. 2 shows a schematic illustration of an installation state machine 20 implemented by the installation program dataset I. The installation state machine 20 can enable an initialized state 21, a secured state 22, an installed state 23 and/or a locked state 24 which can be communicated such that information about the progress of the installation process and/or its status is made available, for example, such that the information can be obtained via the remote management application 8 and/or communication interface 9 to the trusted entity T and/or the user U. The initialized state 21 can be associated with a pre-issuance condition W of the user device 5 and/or the secure element 6. The secured state 22, the installed state 23 and/or the locked state 24 can be associated with a post-issuance condition Z of the user device 5 and/or the secure element 6.

The initialized state 21 is typically associated with the pre-issuance condition W since the installation program dataset I is usually provided to the user device 5 and/or the secure element 6 at a factory, for example at any manufacturing facility, including OEM/ODM vendor facilities, and fabrication facilities of the secure element 6, which may involve and/or be administered by the trust entity T and/or the server device 3. Providing the installation program dataset I to the user device 5 and/or the secure element 6 can be regarded as a zeroth step S0 which may take place before first step S1 of providing data to the user device 5 and/or the secure element 6 (see Fig. 1). In the initialized state 21, the installation program dataset I is loaded into the secure element 6, for example, without being provided with any further data, such as diversified data L.

Consequently, the initialized state 21 may be set and/or assumed until necessary diversified data L, for example, by respective application commands K, such as personalization commands. After fielding the user device 5 and/or the secure element 6, the initialized state 21 should never be assumed again since this would be associated with returning to a pre-issuance condition W which should only be assumed in a protected environment involving the trust entity T. In other words, returning to the initialized state 21 and/or pre-issuance condition W is not an option for performing OS data updates, because after being issued/fielded, for example, by being handed out to the user U, the secure element 6 is actually in an uncertified environment.

For altering powers of the operation system dataset O installed on the user device 5 and/or the secure element 6, the installation state machine 20 can switch to the secured state 22. In the secured state 22, the installation program dataset I and/or an installation instance J implemented thereby can control the installation process and its progress, for example, by being in charge of the process of installing the operating system dataset O and/or the update data subset F. In the event of a reset, the installation program dataset I and/or installation instance J can answer. The installation program dataset I can be provided with all necessary diversified data L.

Installing the update data subset F may only be allowed in the secured state 22. Hence, the secured state 22 can be considered as being in a hybrid condition between the pre-issuance condition W and the post-issuance condition Z because the operating system dataset O can be and/or is being changed, considering that such changes that are actually being made should not correspond to an operational post-issuance state Z of operating the secure element 6, for example, as provided in the installed state 23. Furthermore, a so-called MockSIM can be installed and/or activated in the secure element 6 during the secured state 22 in order to prevent a power off from a baseband which may interrupt the installation process.

In the installed state 23, the installation program dataset I can be deactivated. An operating instance V implemented by the operating system dataset O can be in charge of any processes running on the secure element 6. In the event of a reset, the operating system dataset O operating instance V can answer. Hence, the installed state 23 can be considered as the normal operating state for the user device 5 and/or the secure element 6 when being operated by the user U in the field. The installation state machine 20 can allow for entering the installed state 23 from the secured state 22 and may return from the installed state 23 to the secured state 22 if an update is to be performed, for example, by means of the installation program dataset I.

The locked state 24 can be entered from the initialized state 21, the secured state 22, and/or installed state 23. In the locked state 24, the installation program dataset I is locked, such that it does not respond to application commands K, such as APDU (Application Protocol Data Unit) commands. This can be the case, e.g., due to malfunction, attack, authentication issues, end-of-life, or alike, of the user device 5, the secure element 6 or any data element or component thereof, which may lead to that the installation program dataset I is compromised. Consequently, the locked state 24 can be implemented as a reversible failure state. From the locked state 24, the installation state machine 20 may return to the initialized state 21, the secured state 22, and/or installed state 23 upon being unlocked by respective command, authentication and/or verification, for example, by means of the appropriate security credentials H.

Fig. 3 shows a schematic illustration of an update process supervised by the operating system dataset O. In the present example, the update process is illustrated in accordance with a possible operation state machine 30 which can be implemented along with the installation state machine 20 by the operating system dataset O and/or the installation program dataset I, respectively. For example, respective operating states of the operation state machine 30 can be implemented by the operating system dataset O in line with a life cycle of the secure element 6 as proposed by the GlobalPlatform Technology Card Specification Version 2.3.1 - Public Release, March 2018, Document Reference: GPC_SPE_034, in section 5.1 "Card Life Cycle". In line with this proposal, the operation state machine 30 may provide an operational state 31 ("OP_READY"), initialized state 32 ("INITIALIZED"), secured state 33 ("SECURED"), locked state 34 ("LOCKED") and/or terminated state 35 ("TERMINATED").

In the operational state 31, the operating system dataset O can provide a runtime environment that is ready to handle application commands K, for example, in that it may receive, execute and/or respond to APDU commands. In the initialized state 32, the secure element 6 can be provided with certain security credentials H, diversified data L and/or user profile P data. The secured state 33 can be used for normally operating the secure element 6 while containing all security credentials H necessary for full functionality of the secure element 6.

For allowing to securely conduct update processes, for example, by installing the update data subset F, the operating instance V (see Fig. 2) of the operating system dataset O may hand over control to the installation instance J of the installation program dataset I. Therefore, the installation state machine 20 and the operation state machine 30 may be in their respective secured state 22, 33. While the installation instance J carries out the installation of the update data subset F, a supervision instance Q implemented by the operating system dataset O can query, supervise and/or revise the installation process. Respective information may be provided to the supervision instance Q by the installation instance J. The supervision instance Q may be controlled and/or provided by the operating instance V. Therefore, the operating instance V can be notified of the ongoing installation process of at least one update that a subset F.

After successfully updating the operation system dataset O with the update data subset F, the operation state machine 30 will normally remain in the secured state 33, ending the supervision instance Q, ready to perform any adjustments to data objects D which might have become necessary due to the update procedure (see Fig. 4). Alternatively, the operation state machine 30 may switch to the locked state 34 in case the operating system dataset O has been compromised. The locked state 34 may be implemented by the supervision instance Q and/or the operating instance V of the operating system dataset O in case of irregularities, e.g., due to malfunction, attack, authentication issues, end-of-life, or alike, of the user device 5, the secure element 6 or any data element or component thereof, which may lead to that any security credentials H, the installation program dataset I, the operating system dataset O, and/or the user profile U are or is, respectively, compromised. Furthermore, the operational state machine 30 may enter the terminated state 35 when reaching the end of the life cycle of the of the secure element 6, which may be irreversible.

Fig. 4 shows a schematic illustration of a process of an adaptation of a predefined data format M of at least one data object D to a required data format N. For example, the operating system dataset O installed in the secure element 6 is provided with the previous version A of the executable data subset E, which may be configured an executable load file (ELF). The previous version a of executable data subset E allows for the application process C in the form of version X to be operated. The application process C in the final version X may access a number of the data objects D and their respective predefined data format M. Furthermore, the executable data subset E and/or the application process C may make use of and/or implement an application programming interface (API).

Upon installation of the updated a subset F, for example, in the seventh step S7 (see Fig.1), the operating system dataset O is updated to now include the update data subset F enabling the following version B of the executable data subset E which provides the later version Y of the application process C. Alternatively, or additionally, an additional application process C' may be provided and/or enabled by the following version B of the executable data subset E. Furthermore, an additional API' may be implemented by means of the updated a subset F to be used by the operating system dataset O, the following version B of executable data subset E, the later version Y of the application process C and/or the additional application process C'.

When any one of the data objects D is supposed to be accessed by the API, the additional API', the following version B of executable data subset E, the later version Y of the application process C and/or the additional application process C', the operating instance V of the operating system dataset O, for example, a dedicated data update instance R thereof and/or implemented thereby, checks whether the predefined data format M of the respective data object D matches a required data format M used by the API, the additional API', the following version B of executable data subset E, the later version Y of the application process C and/or the additional application process C', respectively. In other words, the data update instance R revises the data objects D according to their data format if necessary. If the predefined data format M does not match the required data format N, the operating instance V and/or data update instance R can encapsulate the respective data content and morph it into the required data format, for example, by moving the data object D from the first memory region 7a to the second memory region 7b (see Fig. 1). The adjustment of the data object O to the required data format N is successfully accomplished, the respective data left in the predefined data format M may be discarded.

### Reference Signs

- 1: configuration system
- 2: computing device
- 3: server device
- 4: hardware security module
- 5: user device
- 6: secure element
- 7: secure storage location
- 7a: first memory region
- 7b: second memory region
- 8: remote management application
- 9: communication interface
- 10: configuration program
- 11: computer-readable data carrier
- 12: computer-readable medium
- 13: data carrier signal

- 20: installation state machine
- 21: initialised state
- 22: secured state
- 23: installed state
- 24: locked state

- 30: operation state machine
- 31: operational state
- 32: initialised state
- 33: secured state
- 34: locked state
- 35: terminated state

- A: previous version

- B: following version
- C: application process
- C': additional application process
- D: data object
- E: executable data subset
- F: update data subset
- G: notification signal
- H: security credentials
- I: installation program dataset
- J: installation instance
- K: application command
- L: diversified data
- M: predefined data format
- N: required data format
- O: operating system dataset
- P: user profile
- Q: supervision instance
- R: data update instance
- 5: step
- T: trusted entity
- U: user
- V: operating instance
- W: pre-issuance condition /state
- X: former version
- Y: later version
- Z: post-issuance condition / state
- 50: initialise installation program
- S1: provide data
- S2: activate application process
- S3: provide data object
- S4: notification update available
- S5: notification requesting update
- S6: provide update data
- S7: perform update
- 58: finish update
- S9: assess update success
- S10: check data formats

## Claims

1. Method of configuring a user device (5), in particular for secure operation involving a trusted entity (T), the method comprising the steps of
providing a secure element (6) of the user device (5), such as an eUICC, with an operating system dataset (O) for operating the secure element (6), the operating system dataset (O) comprising a previous version (A) of at least one executable data subset (E) defining a former version (X) of an application process (C) configured to access at least one data object (D) having a predefined data format (M);
sending an update data subset (F) to the secure element (6) comprising a following version (B) of the at least one executable data subset (E) defining a later version (Y) of the application process (C) configured to access the at least one data object (D); and
installing the following version (B) of the at least one executable data subset (E) on the secure element (6) such that the later version of the application process (C) can be executed;
wherein when the later version of the application process (C) can be executed, an operating instance (V) implemented by the operating system dataset (O) checks whether the predefined data format (M) of the at least one data object (D) matches a required data format (N) defined by the later version of the application process (C) before accessing the at least one data object (D) with the later version (Y) of the application process (C).

2. Method according to claim 1, further comprising the step of updating the predefined data format (M) to the required data format if the predefined data format (M) does not match the required data format (N).

3. Method according to claim 1 or 2, wherein the step of checking is being carried out upon a first time of handling the at least one data object (D) with the later version (Y) of the application process (C).

4. Method according to at least one of claims 1 to 3, wherein the predefined data format (M) is being adjusted to the required data format if the predefined data format (M) does not match the required data format (N).

5. Method according to at least one of claims 1 to 4, wherein the at least one data object (D) is allocated to a certain memory region (7a, 7b) and the method further comprises the step of reallocating the at least one data object to a different memory region (7a, 7b) if the predefined data format (M) does not match the required data format (N).

6. Method according to at least one of claims 1 to 5, further comprising the step of discarding the at least one data object (D) in the predefined data format (M) if the predefined data format (M) does not match the required data format (N) and/or data class.

7. Method according to at least one of claims claim 1 to 6, wherein a data update instance (R) implemented by the operating system dataset (O) carries out the step of checking whether the predefined data format (M) matches the required data format (N).

8. The method according to at least one of claims 1 to 7, wherein the step of installing the following version (B) of the at least one executable data subset (E) is being carried out by an installation program dataset (I).

9. Method according to claim at least one of claims 1 to 8, wherein an installation instance (J) implemented by the installation program dataset (I) controls the step of installing the following version (B) of the at least one executable data subset (E) and afterwards hands over control to the operating instance (V).

10. Method according to at least one of claims 1 to 9, wherein the at least one data object (D) is being left untouched when installing the following version (B) of the at least one executable data subset (E).

11. Configuration program (10) for configuring a user device (5), in particular for secure operation involving a trusted entity (T), wherein the configuration program (10) comprises instructions which, when the configuration program (10) is executed by a secure element (6), cause the secure element (6) to carry out a method according to at least one of claims 1 to 10.

12. Operating system dataset (O) for a secure element (6) of a user device (5), such as an eUICC, the operating system dataset (O) comprising a at least parts of a configuration program (10) according to claim 11 and/or configured to carry out method according to at least one of claims 1 to 10.

13. Computer-readable data carrier (11, 12, 13) having stored thereon a configuration program (10) according to claim 11 and/or an operating system dataset (O) according to claim 12.

14. User device (3), in particular configured for allowing secure operation involving a trusted entity (T), wherein the user device (3) is configured to carry out a method according to at least one of claims 1 to 10, comprises a configuration program (10) according to claim 11, an operating system dataset (O) according to claim 12 and/or a computer-readable data carrier (11, 12, 13) according to claim 13.

15. Server device (4), in particular a security server providing a secure location for allowing secure operation of user devices (3) involving a trusted entity (T), wherein the server device (4) is configured to carry out a method according to at least one of claims 1 to 10, comprises a configuration program (10) according to claim 11, an operating system dataset (O) according to claim 12 and/or a computer-readable data carrier (11, 12, 13) according to claim 13.

## Amended claims

### Amended claims in accordance with Rule 137(2) EPC.

1. Method of configuring a user device (5), in particular for secure operation involving a trusted entity (T), the method comprising the steps of
providing a secure element (6) of the user device (5), such as an eUICC, with an operating system dataset (O) for operating the secure element (6), the operating system dataset (O) comprising a previous version (A) of at least one executable data subset (E) defining a former version (X) of an application process (C) configured to access at least one data object (D) having a predefined data format (M);
sending an update data subset (F) to the secure element (6) comprising a following version (B) of the at least one executable data subset (E) defining a later version (Y) of the application process (C) configured to access the at least one data object (D); and
installing the following version (B) of the at least one executable data subset (E) on the secure element (6) such that the later version of the application process (C) can be executed;
wherein when the later version of the application process (C) can be executed, an operating instance (V) implemented by the operating system dataset (O) checks whether the predefined data format (M) of the at least one data object (D) matches a required data format (N) defined by the later version of the application process (C) before accessing the at least one data object (D) with the later version (Y) of the application process (C).

2. Method according to claim 1, further comprising the step of updating the predefined data format (M) to the required data format if the predefined data format (M) does not match the required data format (N).

3. Method according to claim 1 or 2, wherein the step of checking is being carried out upon a first time of handling the at least one data object (D) with the later version (Y) of the application process (C).

4. Method according to at least one of claims 1 to 3, wherein the predefined data format (M) is being adjusted to the required data format if the predefined data format (M) does not match the required data format (N).

5. Method according to at least one of claims 1 to 4, wherein the at least one data object (D) is allocated to a certain memory region (7a, 7b) and the method further comprises the step of reallocating the at least one data object to a different memory region (7a, 7b) if the predefined data format (M) does not match the required data format (N).

6. Method according to at least one of claims 1 to 5, further comprising the step of discarding the at least one data object (D) in the predefined data format (M) if the predefined data format (M) does not match the required data format (N) and/or data class.

7. Method according to at least one of claims claim 1 to 6, wherein a data update instance (R) implemented by the operating system dataset (O) carries out the step of checking whether the predefined data format (M) matches the required data format (N).

8. The method according to at least one of claims 1 to 7, wherein the step of installing the following version (B) of the at least one executable data subset (E) is being carried out by an installation program dataset (I).

9. Method according to claim at least one of claims 1 to 8, wherein an installation instance (J) implemented by the installation program dataset (I) controls the step of installing the following version (B) of the at least one executable data subset (E) and afterwards hands over control to the operating instance (V).

10. Method according to at least one of claims 1 to 9, wherein the at least one data object (D) is being left untouched when installing the following version (B) of the at least one executable data subset (E).

11. Configuration program (10) for configuring a user device (5), in particular for secure operation involving a trusted entity (T), wherein the configuration program (10) comprises instructions which, when the configuration program (10) is executed by a secure element (6), cause the secure element (6) to carry out a method according to at least one of claims 1 to 10.

12. Operating system dataset (O) for a secure element (6) of a user device (5), such as an eUICC, the operating system dataset (O) comprising a at least parts of a configuration program (10) according to claim 11 and/or configured to carry out method according to at least one of claims 1 to 10.

13. Computer-readable data carrier (11, 12, 13) having stored thereon a configuration program (10) according to claim 11 and/or an operating system dataset (O) according to claim 12.

14. User device (5), in particular configured for allowing secure operation involving a trusted entity (T), wherein the user device (3) is configured to carry out a method according to at least one of claims 1 to 10, comprises a configuration program (10) according to claim 11, an operating system dataset (O) according to claim 12 and/or a computer-readable data carrier (11, 12, 13) according to claim 13.

15. Configuration system (1) for configuring a user device (5), in particular for secure operation involving a trusted entity (T), the configuration system (1) comprising a server device (4), in particular a security server providing a secure location for allowing secure operation of user devices (5) involving a trusted entity (T), and a user device (5) with a secure element (6), such as an eUICC, wherein the server device (4) and the user device (5) are configured to carry out a method according to at least one of claims 1 to 10, comprise a configuration program (10) according to claim 11, an operating system dataset (O) according to claim 12 and/or a computer-readable data carrier (11, 12, 13) according to claim 13.
